# EUROPEAN PATENT SPECIFICATION

(11) **EP 3 643 539 B1**
(45) Date of publication and mention of the grant of the patent: **10.05.2023**
(21) Application number: 18821545.3
(22) Date of filing: 01.06.2018
(51) Int. Cl.: B29D 30/30, B29D 30/70, B29D 30/06, B29D 30/72, B60C 15/04, B60C 15/00, B60C 17/00, B60C 15/05

(54) **RUN-FLAT TIRE**
NOTLAUFREIFEN
PNEU À AFFAISSEMENT LIMITÉ

(30) Priority: 19.06.2017 JP 2017119809
(43) Date of publication of application: 29.04.2020
(73) Proprietor: Bridgestone Corporation, Tokyo 104-8340 (JP)
(72) Inventor: HASEGAWA, Keiichi, Tokyo 104-8340 (JP); ARIMA, Masayuki, Tokyo 104-8340 (JP)
(74) Representative: Marks & Clerk LLP
(86) International application number: PCT/JP2018/021262
(87) International publication number: WO 2018/235571

(56) References cited:
- WO-A1-2015/159575
- WO-A1-2016/017508
- WO-A1-2017/002872
- WO-A1-2017/061291
- JP-A- 2010 201 959
- JP-A- 2013 063 743
- JP-A- 2016 097 945
- JP-A- 2017 095 616
- US-A- 6 135 183

## Description

### Technical Field

The present invention relates to a run-flat tire.

### Background Art

Japanese Patent Application Laid-Open (JP-A) No. 2013-95369 discloses a side-reinforced run-flat tire in which the tire side portions are reinforced by side reinforcing rubbers and that ensures durability at the time of run-flat traveling (i.e., at the time of abnormal traveling when the air pressure has decreased). Attention is also drawn to the disclosure of US6, 135,183. This document shows a run-flat tire, comprising a pair of bead cores, a carcass that straddles the pair of bead cores, and having end portions that are anchored on the bead cores. Furthermore side reinforcing rubbers that are provided at the tire side portions are present and which extend in a tire radial direction along an inner surface of the carcass. A tread is provided at an outer side, in a tire radial direction, of the carcass; and at the outer side, in the tire radial direction, of the carcass and at an inner side, in a tire radial direction, of the tread, a belt layer is provided, wherein the belt layer is formed by winding the cord in a spiral form along a tire.

### SUMMARY OF INVENTION

### Technical Problem

Because a run-flat tire has side reinforcing rubbers as illustrated in aforementioned JP-A No. 2013-95369, buckling of the tire side portions at the time of run-flat traveling is suppressed. However, if the bead portions come-off of the rim, traveling cannot be continued.

In view of the above described circumstances, an object of the present invention is to suppress coming-off of bead portions from the rim and improve the run-flat durability, in a run-flat tire having side reinforcing rubbers.

### Solution to Problem

A run-flat tire relating to a first aspect has: a pair of bead cores, each bead core formed by covering a wire with resin; a carcass that straddles the pair of bead cores, and having end portions that are anchored on the bead cores; side reinforcing rubbers that are provided at tire side portions, and that extend in a tire radial direction along an inner surface of the carcass; and a tread that is provided at an outer side, in a tire radial direction, of the carcass.

In accordance with the run-flat tire relating to the first aspect, due to covering the wire of the each bead core with resin, the torsional rigidity of the bead cores is high as compared with a case in which the wires are covered by rubber. Due thereto, it is difficult for the bead portions to come-off of the rim, and therefore, the run-flat durability can be improved.

A run-flat tire relating to the first aspect has, at the outer side, in the tire radial direction, of the carcass and at and inner side, in a tire radial direction, of the tread, a belt layer that is formed by covering a cord with resin.

In accordance with the run-flat tire relating to the first aspect, the belt layer is formed by covering a cord with resin. Due thereto, the out-of-plane bending rigidity of the belt layer is high as compared with a case in which covering the cord with rubber. Namely, it is difficult for the belt layer to deform from an annular plane, which runs along the tire circumferential direction and the tire width direction, toward the outer sides of this annular plane. Due thereto, the tread, which is provided at the outer side, in the tire radial direction, of the belt layer, out-of-plane deforming is suppressed, and therefore, buckling of the tread at the time of run-flat traveling is suppressed.

Further, as compared with a case in which covering the cord with rubber, the in-plane (i.e., in the annular plane that runs along the tire circumferential direction and tire width direction) shearing rigidity of the belt layer is high. Therefore, for example, at the time of traveling while turning or the like, it is difficult for the tread to deform with respect to shearing force that is applied to the tread in the tire width direction. Due thereto, an intersecting belt layer can be omitted, and therefore, the weight of the tire is light, and the handling stability at the time of traveling on a normal internal pressure is good.

In a run-flat tire relating to the first aspect, the belt layer is formed by winding the cord in a spiral form along a tire circumferential direction.

In accordance with the run-flat tire relating to the first aspect, due to the belt layer being formed by winding the cord in a spiral form, the ring rigidity of the belt layer is high as compared with a case in which the belt layer is formed by plural cords being lined-up. Due thereto, the tread out-of-plane deforming is further suppressed, and therefore, the buckling suppressing effect of the tread at the time of run-flat traveling can be increased.

A run-flat tire relating to a second aspect has bead fillers that are made of resin and that extend from the bead cores along an outer surface of the carcass toward a tire radial direction outer side.

In accordance with the run-flat tire relating to the second aspect, due to the bead fillers being formed of resin, the torsional rigidity of the bead fillers is high as compared with a case in which the bead fillers are formed of rubber. Due thereto, the force by which the bead fillers suppress deformation of the tire side portions is large, and therefore, the thickness of the side reinforcing rubbers can be made to be small.

If the thickness of the side reinforcing rubbers is small, the bending rigidity with respect to force in the tire radial direction of the tire side portions decreases, and therefore, the vertical spring of the tire at the time of traveling on a normal internal pressure can be reduced. Further, because the volume of the tire reinforcing rubbers is small and the amount of heat generated at the tire side portions is small, the rolling resistance can be reduced. Moreover, because the weight of the tire is light, the handling stability at the time of traveling on a normal internal pressure improves.

### Advantageous Effects of Invention

In accordance with the present invention, the bead portions coming-off of the rim is suppressed, and the run-flat durability can be improved.

### BRIEF DESCRIPTION OF DRAWINGS

Fig. 1 is a half section showing one side of a cut section in which a run-flat tire is cut along a tire width direction and a tire radial direction in a state of being assembled to a rim.
Fig. 2 is a partial enlarged sectional view showing a bead core at the run-flat tire relating to the embodiment of the present invention.
Fig. 3 is a perspective view showing a cord layer at the run-flat tire relating to the embodiment of the present invention.
Fig. 4 is a partial enlarged sectional view showing a modified example, in which a bead core is formed by a wire bundle in which plural bead wires are covered by a covering resin, at the run-flat tire relating to the embodiment of the present invention.
Fig. 5 is a half section showing the invention, in which a belt layer is formed by using a resin-covered cord, at which plural reinforcing cords are covered by a covering resin and whose cross- section is substantially shaped as a parallelogram, at the run-flat tire.

### DESCRIPTION OF EMBODIMENTS

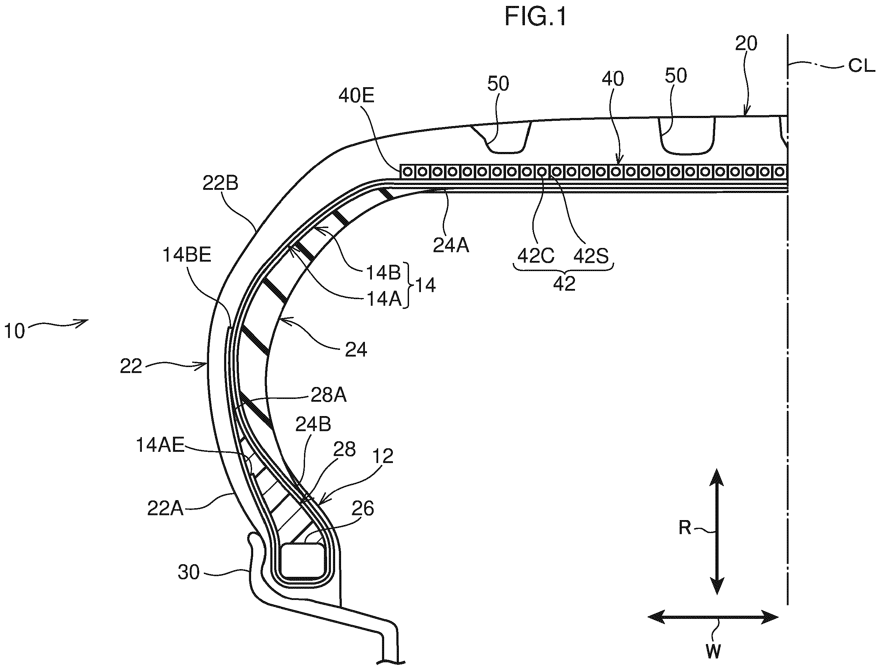

One side of a cut section, which is cut along a tire width direction and a tire radial direction (i.e., a cross-section seen from the direction along the tire circumferential direction), of a run-flat tire (hereinafter called "tire 10") of the present embodiment is shown in Fig. 1. Note that arrow W in the drawings indicates the width direction of the tire 10 (the tire width direction), and arrow R indicates the radial direction of the tire 10 (the tire radial direction). What is called tire width direction here means a direction parallel to the rotational axis of the tire 10. Further, the tire radial direction means a direction orthogonal to the rotational axis of the tire 10. Further, reference letters CL indicate the equatorial plane of the tire 10 (the tire equatorial plane).

Further, in the present embodiment, the side near to the rotational axis of the tire 10 along the tire radial direction is called the "tire radial direction inner side", and the side that is far from the rotational axis of the tire 10 along the tire radial direction is called the "tire radial direction outer side". On the other hand, the side near to the tire equatorial plane CL along the tire width direction is called the "tire width direction inner side", and the sides far from the tire equatorial plane CL along the tire width direction are called the "tire width direction outer sides".

### (Tire)

Fig. 1 shows the tire 10 that is assembled to a rim 30 that is a standard rim, and that is filled to standard air pressure. Note that what is called "standard rim" here refers to the rim prescribed in the 2017 Year Book of JATMA (Japan Automobile Tyre Manufacturer Association, Inc.). Further, the aforementioned standard air pressure is the air pressure corresponding to the maximum load capacity in the 2017 Year Book of JATMA (Japan Automobile Tyre Manufacturer Association, Inc.).

As shown in Fig. 1, the tire 10 has a pair of bead portions 12, a carcass 14 that straddles bead cores 26 embedded in the bead portions 12 and having end portions that are anchored on the bead cores 26, bead fillers 28 that are embedded in the bead portions 12 and extend from the bead cores 26 along the outer surface of the carcass 14 toward an outer side in the tire radial direction, side reinforcing rubbers 24 that are provided at tire side portions 22 and extend in the tire radial direction along the inner surface of the carcass 14, a belt layer 40 that is provided at the tire radial direction outer side of the carcass 14, and a tread 20 that is provided at the tire radial direction outer side of the belt layer 40. Note that only the bead portion 12 at one side is shown in Fig. 1.

The tread 20 that structures the outer peripheral portion of the tire 10 is provided at the tire radial direction outer side of the belt layer 40. The tire side portion 22 is structured by a sidewall lower portion 22A that is at the bead portion 12 side, and a sidewall upper portion 22B that is at the tread 20 side, and the tire side portion 22 connects the bead portion 12 and the tread 20.

### (Bead Portion)

The bead cores 26 that are wire bundles are embedded in the pair of bead portions 12, respectively. The carcass 14 straddles these bead cores 26. Various structures can be employed for the bead cores 26, such as the cross-section thereof is a circular shape or a polygonal shape or the like. Further, for example, a hexagonal shape can be employed as the polygonal shape, but a quadrilateral shape is employed in the present embodiment.

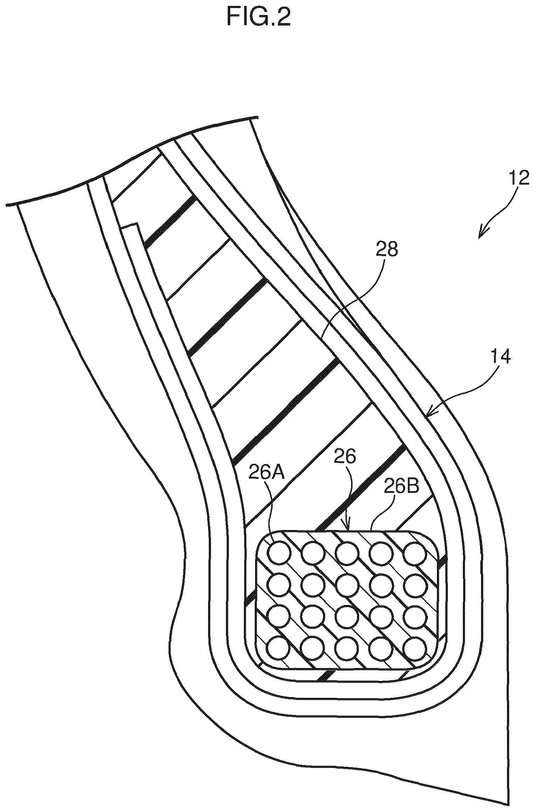

As shown in Fig. 2, the bead core 26 is formed by covering one bead wire 26A with resin, being wound plural times and layered. Concretely, first, the row of the first level is formed by the bead wire 26A that is covered by resin being wound without gaps in the tire width direction. Thereafter, similarly, the bead wire 26A that is covered by resin is stacked on the tire radial direction outer side without gaps, and the bead core 26 whose cross-sectional shape is quadrangular is formed. At this time, the covering resins of the bead wire 26A that are adjacent to one another in the tire width direction and radial direction are joined to one another. Due thereto, the bead core 26 in which the bead wire 26A is covered by a covering resin 26B is formed.

As shown in Fig. 1, the bead filler 28, which is made of resin and extends from the bead core 26 toward an outer side in the tire radial direction, is embedded in the region, which is surrounded by the carcass 14, of the bead portion 12.

### (Carcass)

The carcass 14 is a tire frame member that is structured by two carcass plies 14A, 14B. The carcass ply 14A is the carcass ply that is disposed at the tire radial direction outer side at the tire equatorial plane CL, and the carcass ply 14B is the carcass ply that is disposed at the tire radial direction inner side. The carcass plies 14A, 14B are each formed by plural cords being covered by a covering rubber.

The carcass 14 that is formed in this way extends in a toroidal shape from one of the bead cores 26 toward the other bead core 26, and structures the frame of the tire. Further, the end portion sides of the carcass 14 are anchored on the bead cores 26. Concretely, the end portion sides of the carcass 14 are folded over around the bead cores 26 from the tire width direction inner sides to the tire width direction outer sides, and are anchored. Further, the folded-over end portions of the carcass 14 (i.e., end portions 14AE, 14BE) are disposed at the tire side portions 22. The end portion 14AE of the carcass ply 14A is disposed further toward an inner side in the tire radial direction than the end portion 14BE of the carcass ply 14B.

Note that the present embodiment is structured such that the end portions of the carcass 14 are disposed at the tire side portions 22. However, the present invention is not limited to this structure, and may be structured such that, for example, the end portions of the carcass 14 are disposed at the radial direction inner side of the belt layer 40. Further, a structure can also be employed in which the end portion sides of the carcass 14 are not folded-over, and are nipped-in by the plural bead cores 26 or are wound onto the bead cores 26. In the present specification, the end portions of the carcass 14 being "anchored" on the bead cores 26 includes various types of embodiments such as these.

Note that, in the present embodiment, the carcass 14 is made to be a radial carcass. Further, the material of the carcass 14 is not particularly limited, and rayon, nylon, polyethylene naphthalate (PEN), polyethylene terephthalate (PET), amides, glass fibers, carbon fibers, styrene, or the like can be used. Organic fiber cords are preferable from the standpoint of lightening the weight. Further, the number of cords within the carcass is in a range of 20 ~ 60 cords / 50 mm, but is not limited to this range.

### (Belt Layer)

The belt layer 40 is disposed at an outer side, in the tire radial direction, of the carcass 14.

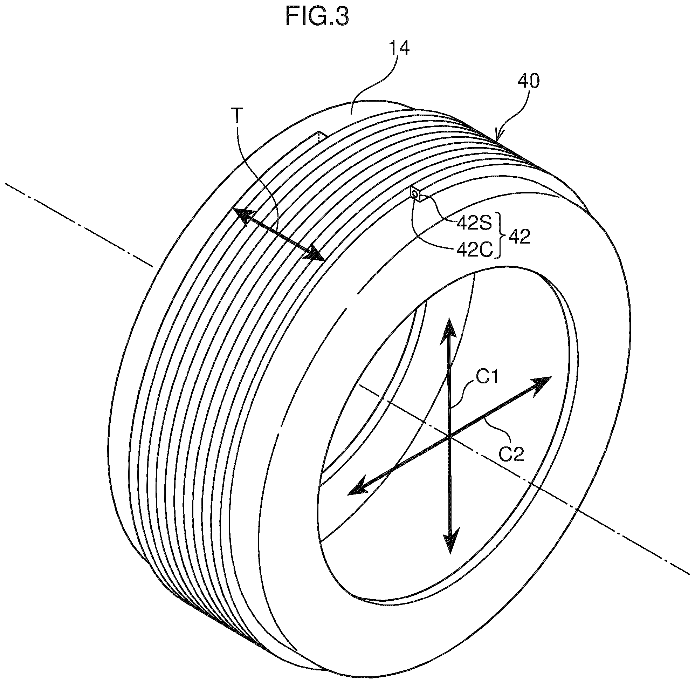

As shown in Fig. 3, the belt layer 40 is a ring-shaped hoop that is formed by winding a resin-covered cord 42 in a spiral form around the outer peripheral surface of the carcass 14 along the tire circumferential direction.

The resin-covered cord 42 is structured by covering a reinforcing cord 42C with a covering resin 42S, and, as shown in Fig. 1, the cross-section thereof is substantially square.

The tire radial direction inner side surface of the covering resin 42S at the resin-covered cord 42 is structured so as to be joined to the outer peripheral surface of the carcass 14 via rubber or an adhesive. Further, the covering resins 42S, which are adjacent to one another in the tire width direction, of the resin-covered cord 42 are joined integrally by thermal welding or an adhesive or the like. Due thereto, the belt layer 40, which is formed from the reinforcing cord 42C that is covered by the covering resin 42S (i.e., a resin-covered belt layer), is formed.

Note that, in the present embodiment, the resin-covered cord 42 is structured by covering the one reinforcing cord 42C with the covering resin 42S, but may be structured by covering a plurality of the reinforcing cords 42C with the covering resin 42S.

The resin material, which is used for the covering resin 26B at the bead core 26, the bead filler 28, and the covering resin 42S at the belt layer 40 in the present embodiment, is a thermoplastic elastomer. However, embodiments of the present invention are not limited to this, and, for example, thermoplastic resins, thermosetting resins, general-purpose resins such as (meth)acrylic resins, EVA resins, vinyl chloride resins, fluorine resins, silicone resins and the like, and, in addition thereto, engineering plastics (included super engineering plastics) and the like can be used as the resin material. Note that vulcanized rubbers are not included among the resin materials here.

A thermoplastic resin (including thermoplastic elastomers) is a polymer compound that, as the temperature rises, the material softens and flows, and, when cooled, enters into a state of being relatively hard and having strength. The present specification differentiates therebetween in that a polymer compound which, as the temperature rises, the material softens and flows, and, when cooled, enters into a state of being relatively hard and having strength, and which has rubber-like elasticity, is considered to be a thermoplastic elastomer, and a polymer compound which, as the temperature rises, the material softens and flows, and, when cooled, enters into a state of being relatively hard and having strength, and which does not have rubber-like elasticity, is considered to be a thermoplastic resin that is not an elastomer.

Examples of thermoplastic resins (including thermoplastic elastomers) include polyolefin thermoplastic elastomers (TPO), polystyrene thermoplastic elastomers (TPS), polyamide thermoplastic elastomers (TPA), polyurethane thermoplastic elastomers (TPU), polyester thermoplastic elastomers (TPC) and dynamically cross-linked thermoplastic elastomers (TPV), as well as polyolefin thermoplastic resins, polystyrene thermoplastic resins, polyamide thermoplastic resins and polyester thermoplastic resins, and the like.

A thermosetting resin is a polymer compound that, together with a rise in temperature, forms a three-dimensional network structure and hardens, and examples thereof are phenol resins, epoxy resins, melamine resins, urea resins, and the like.

Further, the bead wire 26A of the bead core 26 and the reinforcing cord 42C of the belt layer 40 of the present embodiment are made to be styrene cords. These styrene cords have styrene as the main component thereof, and can include minute amounts of various substances such as carbon, manganese, silicon, phosphorous, sulfur, copper, chromium and the like.

Note that embodiments of the present invention are not limited to this, and, as the bead wire 26A at the bead core 26 and the reinforcing cord 42C at the belt layer 40, monofilament cords or cords in which plural filaments are intertwined together can be used instead of styrene cords. Various designs can be employed for the intertwined structure as well, and various cross-sectional structures, intertwining pitches, intertwining directions, and distances between adjacent filaments also can be employed. Moreover, cords in which filaments of different materials are twisted together can be employed, and the cross-sectional structure also is not particularly limited, and various intertwined structures of single intertwining, layered intertwining, multiple intertwining and the like can be used.

### (Tread)

The tread 20 is provided at an outer side, in the tire radial direction, of the belt layer 40. The tread 20 is the region that contacts the road surface during traveling. Plural circumferential direction grooves 50 that extend in the tire circumferential direction are formed in the ground-contacting surface of the tread 20. The shapes and the number of the circumferential direction grooves 50 are set appropriately in accordance with the performances that are required of the tire 10, such as the drainability and handling stability and the like.

### (Side Reinforcing Rubber)

The tire side portion 22 extends in the tire radial direction and connects the bead portion 12 and the tread 20, and is structured so as to be able to bear load that is applied to the tire 10 at the time of run-flat traveling. At this tire side portion 22, the side reinforcing rubber 24 that reinforces the tire side portion 22 is provided at the tire width direction inner side of the carcass 14. The side reinforcing rubber 24 is a reinforcing rubber for, in a case in which the internal pressure of the tire 10 decreases due to a puncture or the like, enabling traveling over a predetermined distance in a state of supporting the weight of the vehicle and the passengers.

In the present embodiment, the side reinforcing rubber 24 is formed of one type of rubber material. However, embodiments of the present invention are not limited to this, and the side reinforcing rubber 24 may be formed of plural rubber materials. Further, provided that a rubber material is the main component thereof, the side reinforcing rubber 24 may contain, in addition thereto, materials such as fillers, short fibers, resin, or the like. Moreover, in order to improve the durability at the time of run-flat traveling, the side reinforcing rubber 24 may contain a rubber material of a hardness of 70 ~ 85 as the rubber material that structures the side reinforcing rubber 24. What is called hardness of the rubber here means the hardness prescribed by JIS K6253 (type A durometer). Moreover, the side reinforcing rubber 24 may contain a rubber material having the property of a loss factor tan δ of 0.10 or less, measured under the conditions of a frequency of 20 Hz, an initial strain of 10%, a dynamic strain of ±2%, and a temperature of 60°C, by using a viscoelasticity spectrometer (e.g., a spectrometer manufactured by Toyo Seiki Seisaku-sho, Ltd.).

The side reinforcing rubber 24 extends along the inner surface of the carcass 14 in the tire radial direction from the bead portion 12 side to the tread 20 side. Further, the side reinforcing rubber 24 is made to be a shape whose thickness decreases from the central portion toward the bead portion 12 side and the tread 20 side, e.g., a substantial crescent shape. Note that what is called the thickness of the side reinforcing rubber 24 here means the length along the normal line of the carcass 14.

A lower end portion 24B at the bead portion 12 side of the side reinforcing rubber 24 overlaps the bead filler 28 with the carcass 14 nipped therebetween, as seen from the tire width direction. Further, an upper end portion 24A at the tread 20 side of the side reinforcing rubber 24 overlaps the belt layer 40 as seen from the tire radial direction. Concretely, the upper end portion 24A of the side reinforcing rubber 24 overlaps the belt layer 40 with the carcass 14 nipped therebetween. In other words, the upper end portion 24A of the side reinforcing rubber 24 is positioned further toward an inner side in the tire width direction than a tire width direction end portion 40E of the belt layer 40.

### (Operation/Effects)

In the tire 10 relating to the present embodiment, the bead core 26 is formed by the bead wire 26A being covered by the covering resin 26B. Due thereto, the torsional rigidity of the bead core 26 is high, as compared with a case in which the bead wire 26A is covered by rubber. Due thereto, because it is difficult for the bead portion 12 to come-off of the rim 30, the run-flat durability can be improved.

Further in the tire 10 relating to the present embodiment, the belt layer 40 is formed by the reinforcing cord 42C being covered by the covering resin 42S. Due thereto, the out-of-plane bending rigidity of the belt layer 40 is high, as compared with a case in which the reinforcing cord 42C is covered by rubber. Namely, it is difficult for the belt layer 40 to deform from an annular plane, which runs along the tire circumferential direction and the tire width direction, toward the outer sides of this annular plane (e.g., in directions shown by arrows C1, C2 in Fig. 3). Due thereto, the tread 20 out-of-plane deforming is suppressed, and therefore, buckling of the tread 20 at the time of run-flat traveling is suppressed.

Moreover, due to the out-of-plane bending rigidity of the belt layer 40 being high, collapsing-in of the tire side portion 22 toward the tire width direction inner side can be suppressed, and therefore, the thickness of the side reinforcing rubber 24 can be made to be small. Due thereto, the effect of reducing the vertical spring, the effect of reducing the rolling resistance, and the effect of improving the handling stability can be improved.

Further, as compared with a case in which the reinforcing cord 42C is covered by a rubber, the in-plane (i.e., in the annular plane that runs along the tire circumferential direction and the tire width direction) shearing rigidity of the belt layer 40 is high. Therefore, for example, at the time of traveling while turning or the like, it is difficult for the tread 20 to deform with respect to shearing force T (see Fig. 3) that is applied to the tread 20 in the tire width direction. Due thereto, an intersecting belt layer can be omitted, and therefore, the weight of the tire is light, and the handling stability at the time of traveling on a normal internal pressure is good.

Further, in the tire 10 relating to the present embodiment, due to the belt layer 40 being formed by the resin-covered cord 42 (and the reinforcing cord 42C) being wound in a spiral form, the ring rigidity of the belt layer 40 is high as compared with a case in which the belt layer 40 is formed by plural cords being lined-up. Due thereto, the tread 20 out-of-plane deforming is further suppressed, and therefore, the buckling suppressing effect of the tread 20 at the time of run-flat traveling can be increased.

At the tire 10 relating to the present embodiment, the bead filler 28 is made of resin. Due thereto, the torsional rigidity of the bead filler 28 is high as compared with a case in which the bead filler 28 is formed of rubber. Due thereto, the force by which the bead portion 12, in which the bead filler 28 is embedded, suppresses deformation of the tire side portion 22 is large, and therefore, the thickness of the side reinforcing rubber 24 can be made to be small.

If the thickness of the side reinforcing rubber 24 is small, the bending rigidity with respect to force in the tire radial direction of the tire side portion 22 decreases, and therefore, the vertical spring of the tire 10 at the time of traveling on a normal internal pressure can be reduced. Further, because the volume of the side reinforcing rubber 24 is small and the amount of heat generated at the tire side portion 22 is small, the rolling resistance can be reduced. Moreover, because the weight of the tire 10 is light, the handling stability at the time of traveling on a normal internal pressure improves.

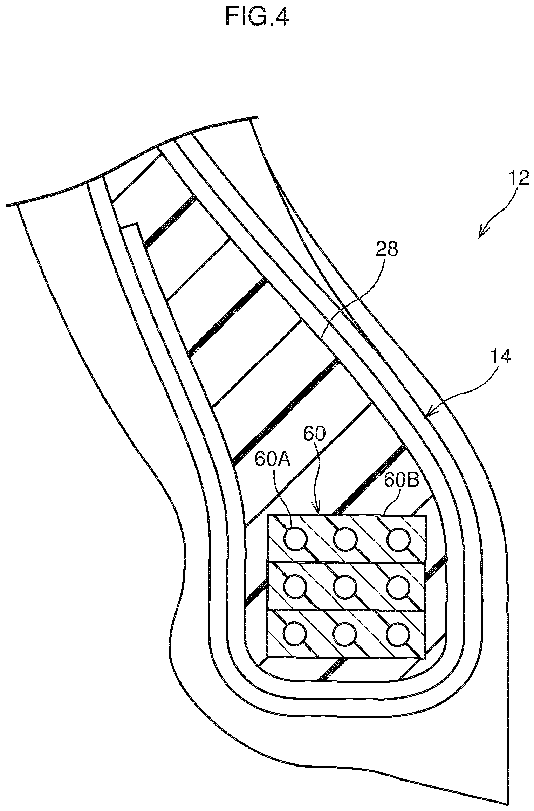

Note that, in the present embodiment, the bead core 26 is formed by the one bead wire 26A, which is covered by the covering resin 26B, being wound and layered, but embodiments of the present invention are not limited to this. For example, as at the bead core 60 shown in Fig. 4, the bead core may be formed by a wire bundle, in which plural bead wires 60A are covered by a covering resin 60B, being wound and layered.

In this case, the boundary surfaces at the time of layering are fused by thermal welding. The number of the bead wires 60A that is contained in one wire bundle is not limited to three, and may be two or may be four or more. Further, the number of wire bundles in each layer in which wire bundles are layered may be one bundle as shown in Fig. 4, or plural wire bundles may be placed adjacent in the tire width direction such that there are two or more wire bundles.

Even if a covering rubber is used instead of the covering resin 26B, or the bead filler 28 is formed of rubber, due to the belt layer 40 being formed by the reinforcing cord 42C being covered by the covering resin 42S, buckling of the tread 20 at the time of run-flat traveling can be suppressed.

Further, in the present embodiment, which does not belong to the invention, the belt layer 40 is formed by the resin-covered cord 42, which is substantially square and is formed by the one reinforcing cord 42C being covered by the covering resin 42S, being wound on the outer peripheral surface of the carcass 14.

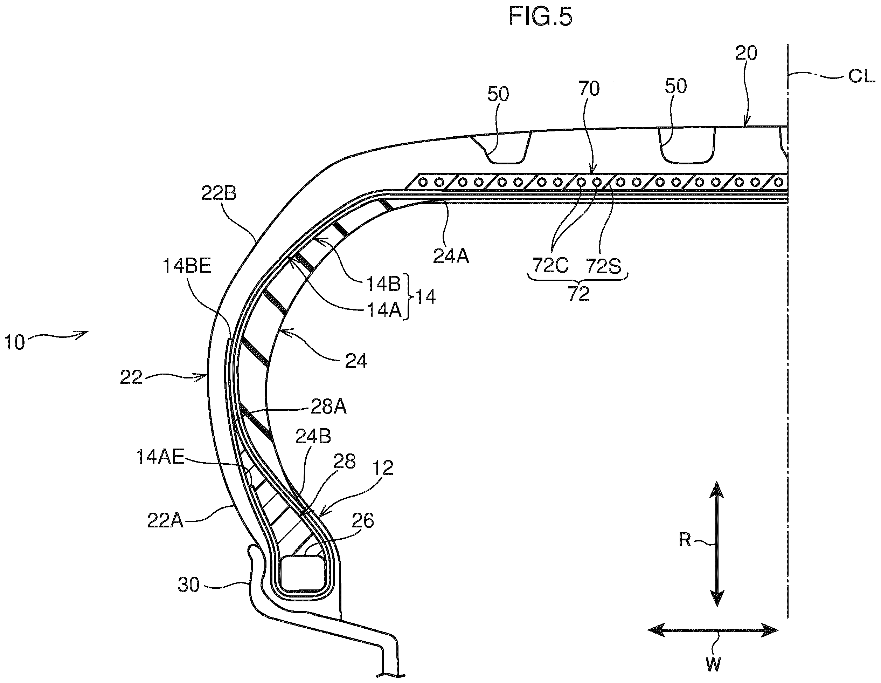

According to the invention, as in a belt layer 70 shown in Fig. 5, the belt layer is formed by a resin-covered cord 72, whose cross-section is substantially shaped as a parallelogram and that is formed by plural reinforcing cords 72C being covered by the covering resin 42S, being wound on the outer peripheral surface of the carcass 14.

## Claims

1. A run-flat tire (10), comprising:
a pair of bead cores (26), each bead core formed by covering a wire (26A) with resin;
a carcass (14) that straddles the pair of bead cores, and having end portions that are anchored on the bead cores;
side reinforcing rubbers (24) that are provided at tire side portions (22), and that extend in a tire radial direction along an inner surface of the carcass;
a tread (20) that is provided at an outer side, in a tire radial direction, of the carcass; and
at the outer side, in the tire radial direction, of the carcass and at an inner side, in a tire radial direction, of the tread, a single belt layer (70) that is formed by covering plural reinforcing cords (72C) with resin (42S) to form a resin-covered cord structure whose cross-section is shaped as a parallelogram,
wherein the belt layer is formed by winding the resin-covered cord structure in a spiral form along a tire circumferential direction, adjacent sections of the resin-covered cord structure in the tire width direction being integrally welded to one another.

2. The run-flat tire of any one of claim 1, comprising bead fillers (28) that are made of resin and that extend from the bead cores along an outer surface of the carcass toward a tire radial direction outer side.

## Patentansprüche

1. Notlaufreifen (10), Folgendes umfassend:
ein Paar von Wulstkernen (26), wobei jeder Wulstkern durch Umhüllen eines Drahts (26A) mit Harz ausgebildet ist;
eine Karkasse (14), die das Paar von Wulstkernen überspannt und Endabschnitte aufweist, die an den Wulstkernen verankert sind;
Seitenverstärkungsgummis (24), die an Seitenabschnitten des Reifens (22) bereitgestellt sind und die sich in einer Radialrichtung des Reifens entlang einer inneren Oberfläche der Karkasse erstrecken;
eine Lauffläche (20), die an einer Außenseite der Karkasse in einer Radialrichtung des Reifens bereitgestellt ist; und
an der Außenseite der Karkasse in der Radialrichtung des Reifens und an einer Innenseite der Lauffläche in einer Radialrichtung des Reifens eine einzelne Gürtellage (70), die durch Bedecken mehrerer Verstärkungskorden (72C) mit Harz (42S) ausgebildet ist, um eine harzbedeckte Kordstruktur auszubilden, deren Querschnitt als ein Parallelogramm geformt ist,
wobei die Gürtellage durch Wickeln der harzbedeckten Kordstruktur in einer Spiralform entlang einer Umfangsrichtung des Reifens ausgebildet ist, wobei angrenzende Abschnitte der harzbedeckten Kordstruktur in der Breitenrichtung des Reifens einstückig miteinander verschweißt sind.

2. Notlaufreifen nach Anspruch 1, Wulstfüller (28) umfassend, die aus Harz bestehen und die sich von den Wulstkernen entlang einer äußeren Oberfläche der Karkasse hin zu einer in Radialrichtung des Reifens äußeren Seite erstrecken.

## Revendications

1. Pneu à roulage à plat (10), comprenant :
une paire de tringles (26), chaque tringle étant formée en recouvrant un câblé (26A) de résine ;
une carcasse (14) qui chevauche la paire de tringles, et comportant des parties d'extrémité qui sont ancrées sur les tringles ;
des gommes de renforcement latérales (24) fournies au niveau des parties latérales (22) du pneumatique et qui s'étendent dans une direction radiale du pneumatique, le long d'une surface interne de la carcasse ;
une bande de roulement (20) fournie au niveau d'un côté externe, dans une direction radiale du pneumatique, de la carcasse ; et
au niveau du côté externe, dans la direction radiale du pneumatique, de la carasse, et au niveau d'un côté interne, dans une direction radiale du pneumatique, de la bande de roulement, une seule couche de ceinture (70) qui est formée en recouvrant plusieurs câblés de renforcement (72C) de résine (42S) pour former une structure de câblé recouverte de résine dont la section transversale a la forme d'un parallélogramme,
dans lequel la couche de ceinture est formée en enroulant la structure de câblé recouverte de résine en une forme en spirale le long d'une direction circonférentielle du pneumatique, des sections adjacentes de la structure de câblé recouverte de résine étant soudées d'une seule pièce l'une à l'autre dans la direction de la largeur du pneumatique.

2. Pneu à roulage à plat selon la revendication 1, comprenant des bourrages sur tringle (28) qui sont constitués de résine et qui s'étendent des tringles le long d'une surface externe de la carcasse vers un côté externe dans une direction radiale du pneumatique.
